# EUROPÄISCHE PATENTANMELDUNG

(11) **EP 0 989 699 A2**
(43) Veröffentlichungstag der Anmeldung: **29.03.2000**
(21) Anmeldenummer: 99116797.4
(22) Anmeldetag: 01.09.1999
(51) Int. Cl.: H04L 9/08

(54) **Schlüsselverteilverfahren mit verringerter Schlüsselaustauschzeit**

(30) Priorität: 23.09.1998 DE 19843661
(71) Anmelder: SIEMENS AKTIENGESELLSCHAFT, 80333 München (DE)
(72) Erfinder: Markwitz, Wernhard, Dr., 80469 München (DE)

(57) **Zusammenfassung**

Die Erfindung betrifft ein Schlüsselverteilverfahren bei dem Schlüsselkomponenten, insbesondere gemäß dem Public-Key-Verfahren oder gemäß dem Potenzsystem, zwischen den Kommunikationspartnern übertragen werden, die dann jeweils zu einem Schlüsselwort verknüpft werden. Erfindungsgemäß bilden Teile des Schlüsselwortes den jeweiligen Schlüssel für eine der folgenden symmetrisch verschlüsselten Kommunikationsverbindung.

## Beschreibung

Die Erfindung betrifft ein Schlüsselverteilverfahren beziehungsweise den Schlüsselaustausch in einem hybriden end-to-end Verschlüsselungssystem, bei dem Schlüsselkomponenten zwischen den Kommunikationspartnern übertragen werden, sowie eine hierfür ausgebildete Verschlüsselungseinrichtung.

Einen Datenstrom, beispielsweise Text oder Sprache, zu verschlüsseln, bedeutet meistens, ihn mit Hilfe einer Rechenvorschrift in einen verschlüsselten Datenstrom umzurechnen. Die Sicherheit fast aller moderner Verschlüsselungssysteme hängt von der Kompliziertheit dieser Umsetzung beziehungsweise Umrechnung ab. Die Daten werden durch die Verschlüsselung so stark verändert, daß jemand, der die Rechenvorschrift nicht kennt, nicht in der Lage ist, den Verschlüsselungsprozess mit wirtschaftlich vertretbarem Aufwand umzukehren. Solche Verschlüsselungen werden als rechnerisch sicher bezeichnet.

Bei modernen Verschlüsselungsverfahren werden neben symmetrischen Schlüsselverfahren sogenannte asymmetrische Verschlüsselungen eingesetzt. Eine solche asymmetrische Verschlüsselung ist das bekannte Public-Key-Verfahren. Bei diesem Verfahren besitzen Absender und Empfänger jeweils einen eigenen, unterschiedlichen Schlüssel, die mit dem Buchstaben E und D bezeichnet werden. Mit dem E-Schlüssel chiffriert der Absender die Daten, die der Empfänger mit dem D-Schlüssel wieder dechiffriert. Die beiden Schlüssel E und D stehen nur insofern in einer Beziehung, als man mit ihrer Hilfe die zueinander inversen Operationen des Chiffrierens und Dechiffrierens ausführt. Bei einigen Verfahren kann man die Reihenfolge der Operationen auch umkehren, also zuerst den D-Schlüssel und dann den E-Schlüssel anwenden. Die Sicherheit des Public-Key-Verfahrens beruht darauf, daß es praktisch unmöglich ist, aus dem D-Schlüssel den E-Schlüssel abzuleiten.

Bei dem Public-Key-Verschüsselungsverfahren werden sogenannte Falltür-Funktionen verwendet, mit deren Hilfe die oben beschriebenen E- beziehungsweise D-Schlüssel erzeugt werden. Als Beispiele für diese Falltür-Funktionen wird auf Untersummen-System von Ralph Merkle und Martin E. Hellmann sowie auf das RSA-System von Ronald Rivest, Adi Shamir und Leonard Adleman verwiesen. Einzelheiten hierzu sind beispielsweise in dem Artikel ,, Die Mathematik neuer Verschlüsselungssysteme" von Martin E. Hellmann, erschienen im Spektrum der Wissenschaft, 1979, Heft 10, Seiten 93 bis 101 zu entnehmen.

Bei diesem bekannten Verfahren werden zu Beginn eines Datenaustauschs, beispielsweise zu Beginn eines vertraulichen Gesprächs, Schlüsselkomponenten zwischen den Kommunikationsteilnehmern ausgetauscht. Jeder der Kommunikationsteilnehmer, beziehungsweise deren Endgeräte, überträgt mit den Schlüsselkomponenten den E- und den D-Schlüssel oder mit Hilfe eines Potenzsystems das entsprechende Schlüsselwort. Solche Schlüsselwörter sind beispielsweise 1000 und mehr Bit lang.

Diese Verfahren zum Schlüsselaustausch in sicheren Endgeräten und Systemen leiden unter der für den Benutzer relativ langen Zeit für den Schlüsselaustausch. Um diese relativ lange Zeit für einen Schlüsselaustausch nur einmal am Tag auftreten zu lassen, wird das sogenannte Short-Time-Hold-Verfahren eingesetzt, bei dem ein ausgetauschter Schlüssel für einen definierten Zeitraum gültig bleibt. Diese Methode beeinträchtigt die Sicherheit, da bei der Bestimmung des verwendeten Schlüssels mehr Nachrichten entschlüsselt werden können, als im Vergleich dazu möglich ist, wenn pro Verbindungsaufbau jeweils ein neuer Schlüssel generiert und ausgetauscht wird.

Der Erfindung liegt die Aufgabe zugrunde, ein Schlüsselverteilverfahren beziehungsweise eine Verschlüsselungseinrichtung anzugeben, bei der die Schlüsselaustauschzeiten reduziert sind.

Diese Aufgabe wird erfindungsgemäß für ein Verfahren durch die im Patentanspruch 1 und für eine Einrichtung durch die im Patentanspruch 2 angegebenen Merkmale gelöst.

Bei einem Schlüsselaustauschverfahren gemäß dem Public-Key-System oder gemäß einem Potenzsystems werden Schlüsselworte mit einer Länge von 1000 und mehr Bit erzeugt. Für den Verschlüsselungsvorgang selbst werden im allgemeinen nur zwischen 100 und 500 Bit benötigt. Erfindungsgemäß wird ein ausgetauschtes Schlüsselwort in mehrere Schlüsselteilworte zerlegt, die bei den aufeinanderfolgenden Kommunikationsverbindungen zu dem jeweils gleichen Kommunikationspartner für den Verschlüsselungsvorgang verwendet werden.

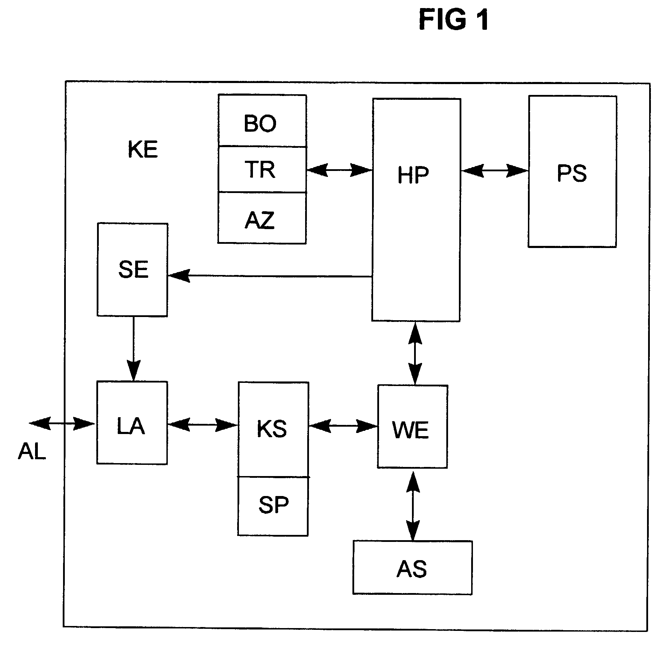

Im folgenden wird die Erfindung anhand eines in der Zeichnung dargestellten Ausführungsbeispieles beschrieben.

In der einzigen Figur ist ein digitales Kommunikationsendgerät KE mit einem Hauptprozessor HP dargestellt. Der Hauptprozessor HP ist mit einem Programmspeicher PS und einer Bedienoberfläche BO verbunden. Der Programmspeicher PS ist vorzugsweise durch einen ROM-Speicherbaustein realisiert. Die Bedienoberfläche BO kann einen Tastaturblock TR und eine Anzeigeeinrichtung AZ aufweisen. Weiter ist der Hauptprozessor HP mit einer Signalisierungseinrichtung SE verbunden, die an einer Leitungsanschaltung LA angeschlossen ist. Über die Leitungsanschaltung LA ist das Kommunikationsendgerät KE über eine Anschlußleitung AL mit einem nicht dargestellten Kommunikationsnetz verbunden.

Für die Erfindung ist es unerheblich, ob das Kommunikationsendgerät KE mit einem digitalen oder analogen Kommunikationsnetz verbunden ist, wobei im letzteren Fall die Leitungsanschaltung LA beispielsweise ein Modem zur digitalen Signalübertragung aufweist. Weiter kann des Kommunikationsendgerät KE auch drahtlos mit einem cellularen Funknetz verbunden sein.

Eine Wandlereinrichtung WE ist mit einer akustischen Schnittstelle AS verbunden, die die Sprachein- und -ausgabe mit einem Teilnehmer ermöglicht und hierzu beispielsweise ein Mikrofon und einen Lautsprecher aufweist. Diese sind für die Erfindung von untergeordneter Bedeutung und in der Figur nicht explizit dargestellt. Die Wandlereinrichtung WE ist weiter mit dem Hauptprozessor HP und über einen Kryptoschaltkreis KS mit der Leitungsanschaltung LA verbunden. Der Kryptoschaltkreis KS dient zur Verschlüsselung der Sprachdaten, die vom Teilnehmer über das Kommunikationsendgerät KE mit dem Kommunikationsnetz ausgetauscht werden.

Die Verschlüsselung in dem Kryptoschaltkreis KS erfolgt vorzugsweise nach dem Public-Key-System oder nach dem Potenzsystem. Einzelheiten des Verschlüsselungsvorgangs sind in dem Eingangs genannten Aufsatz beschrieben. Zu Beginn einer Kommunikationsverbindung, zumindest einer jeden vertraulichen Verbindung, wird zwischen dem Kommunikationsendgerät KE und mit dem über das Kommunikationsnetz verbundenen Kommunikationsteilnehmer ein Schlüsselwort vereinbart.

Erfindungsgemäß bilden Teile des Schlüsselwortes den jeweiligen Schlüssel für eine aktuelle und für eine oder mehrere der folgenden Kommunikationsverbindungen zu dem betreffenden Kommunikationspartner. Das Schlüsselwort wird daher zusammen mit der Rufnummer des entsprechenden Kommunikationsteilnehmers in einem Speicher SP abgelegt. Der Speicher SP kann in den Kryptoschaltkreis KS integriert sein.

Bei einer angenommenen Schlüsselwortlänge von 1000 Bit, und bei einer ebenfalls angenommenen Länge von 100 Bit für eine anschließende symmetrische Verschlüsselung, können mit nur einem einzigen Schlüsselaustausch Schlüsselworte für 10 Kommunikationsverbindungen erzeugt werden. Bei einem erstmaligen Schlüsselaustausch mit einem Kommunikationspartner sind beispielsweise mehrere Sekunden aufzuwenden. Bei den folgenden 9 Kommunikationsverbindungen mit diesem Teilnehmer muß bei Verwendung des erfindungsgemäßen Schlüsselverteilverfahrens keine zusätzliche Zeit für den Schlüsselaustausch verwendet werden.

Die Erfindung ist nicht auf ein asymmetrisches Verschlüsselungsverfahren beschränkt. Sie kann auch bei symmetrischen Verfahren Anwendung finden.

## Patentansprüche

1. Schlüsselverteilverfahren
bei dem Schlüsselkomponenten, insbesondere gemäß dem Public-Key-Verfahren oder gemäß dem Potenzsystem, zwischen den Kommunikationspartnern übertragen werden, die dann jeweils zu einem Schlüsselwort verknüpft werden,
**dadurch gekennzeichnet,** daß
Teile des Schlüsselwortes den jeweiligen Schlüssel für eine der folgenden symmetrisch verschlüsselten Kommunikationsverbindung bilden.

2. Verschlüsselungseinrichtung für ein Kommunikationsendgerät (KE),
mit einem Kryptoschaltkreis (KS) zur Ermittlung eines Schlüsselwortes zu Beginn einer Kommunikationsverbindung,
**dadurch gekennzeichnet,** daß
ein Speicher (SP) zur Ablage des zu einer Rufnummer ermittelten Schlüsselwortes vorgesehen ist, wobei Teile des Schlüsselwortes den jeweiligen Schlüssel für eine der folgenden Kommunikationsverbindung bilden.
